# EUROPEAN PATENT SPECIFICATION

(11) **EP 3 786 531 B1**
(45) Date of publication and mention of the grant of the patent: **12.04.2023**
(21) Application number: 20188023.4
(22) Date of filing: 28.07.2020
(51) Int. Cl.: F24C 15/32, F16J 15/3204, F24C 14/00

(54) **A COOKING DEVICE COMPRISING A SEALING MEMBER**
GARGERÄT MIT EINEM DICHTUNGSELEMENT
DISPOSITIF DE CUISSON COMPRENANT UN ÉLÉMENT D'ÉTANCHÉITÉ

(30) Priority: 02.09.2019 TR 201913209
(43) Date of publication of application: 03.03.2021
(73) Proprietor: Arçelik Anonim Sirketi, 34445 Istanbul (TR)
(72) Inventor: SABAH, Fatih, 34445 Istanbul (TR); CENGIZ, Osman, 34445 ISTANBUL (TR); YALCINKAYA, Enis Turgut, 34445 ISTANBUL (TR); KARAER, Erol, 34445 ISTANBUL (TR); KUM, Yalcin, 34445 Istanbul (TR)

(56) References cited:
- WO-A1-2014/147239
- CN-A- 106 152 190
- CN-U- 209 136 244
- DE-A1- 2 006 622
- DE-A1- 3 738 267
- DE-A1- 4 105 300
- DE-A1-102014 114 288
- US-A1- 2009 183 724

## Description

The present invention relates to a cooking device wherein the cooking chamber is in contact with water.

In ovens which are cooking devices, the foodstuff placed into the cooking chamber and cooked at high temperatures may spill into the cooking chamber, splatter to the walls of the cooking chamber and stick thereto. The cooking chamber becomes dirty because of the foodstuff, oil, etc. which stick to and dry on the walls of the cooking chamber. Removing the dirt which accumulates on the walls of the cooking chamber is a very laborious process. For the cleaning process high amount of time and energy is consumed, and said cleaning process damages the walls of the cooking chamber.

Especially, cooking devices wherein the cooking chamber is in contact with water, such as ovens with washable cooking chambers and steam cooking ovens, or ovens with both these features have been widely used in recent years. In a state of the art cooking device having the features mentioned-above, in other words having a cooking chamber which is in contact with water, water and steam may leak to the region accommodating the fan and motor through the motor shaft during the washing and/or steam cooking processes. In the state of the art embodiment, the cylindrical disk which is placed in the water return member and which is used for avoiding water leakage is not efficient and water cannot be prevented from leaking into the motor and fan region. In this case, the leaking water reaches the electronic card and causes problems such as customer dissatisfaction, decreased product safety and increased service error rate.

Furthermore, in state of the art embodiments, the motor is inserted through the perforated channels on the casing during the mounting process. Since the diameter of the channels is smaller than the diameter of the cylindrical disk, the cylindrical disk which is used for leakproofing is ripped or displaced during the mounting process.

Another state of the art embodiment is disclosed in the Chinese Utility Model Document Application No. CN207229450. In this document, a gasket is disclosed, which is disposed onto the shaft of the motor and which prevents the steam in the cooking chamber from leaking.

In another state of the art embodiment International Patent Application No. WO2016059129, a cleaning device which automatically cleans the interior of the oven is disclosed. The cleaning device comprises a spray arm which moves by means of water pressure and the walls of the cooking chamber are washed using the pressurized water sprayed into the cooking chamber by means of the spray arms.

Another state of the art embodiment is disclosed in United States Patent Application No. US2017045233. In this embodiment, an oven with steam cleaning feature is disclosed, comprising a mechanism which solves the problems of removing the oil and then discharging the water.

Furthermore US 2009/183724 A1 relates to a cooking device such as a microwave oven for heating an object. A casing for housing the bladed wheel is provided inside the exhaust duct at the inlet side. The output shaft is inserted into a shaft hole of a mounting plate and a shield plate.

DE 10 2014 114288 A1 relates to a fan drive shaft for a fan in a cooking appliance and a cooking appliance. A seal is arranged in the region of the passage. The seal is provided in order to insulate the interior, which is warm during operation, so that the heat does not burden the electronics housed in the installation space.

Finally WO 2014/147239 A1 relates to a sealing apparatus that is suitable for providing a leak-proofing between a cooking chamber of an oven and the outside environment.

The aim of the present invention is the realization of a cooking device wherein the water is prevented from leaking to the motor and the fan region through the shaft of the motor.

The cooking device realized in order to attain the aim of the present invention, explicated in the first claim and the respective claims thereof, comprises a casing; a fan which is disposed in front of the casing; a motor which is disposed behind the casing; a shaft which transfers the movement of the motor to the fan and which is connected to the motor at one end and to the fan at the other end; a return member which is disposed between the casing and the motor onto the shaft so as to be coaxial with the shaft and which has an opening thereon through which the shaft is inserted; and a sealing member which is placed onto the shaft so as to be coaxial with the shaft and which has a cover which covers the opening and a skirt which surrounds the return member when placed onto the return member. By attaching the sealing member onto the return member, problems such as displacement of the sealing member during the mounting of the motor and degradation of the sealing features are prevented.

According to the present invention, the sealing member further comprises a hole which is arranged at the center of the cover and through which the shaft passes; at least one slit which is formed on the surface of the cover from the periphery of the hole outwards. According to a preferred embodiment, the skirt extends perpendicular to the cover and surrounds the cover.

In an embodiment of the present invention, the sealing member comprises slits which are equidistantly arranged in the radial direction so as to surround the hole. In this embodiment of the present invention, by means of the slits, the cover is rendered flexible and thus, the shaft is enabled to pass through the hole without difficulty and the sealing is prevented from being decreased during said process. The slits act as a curtain such that the sealing member is prevented from adversely affecting the rotational speed of the motor and slowing the motor down, and water or steam leakage from the cooking chamber into the motor section is avoided.

By means of the present invention, the motor and fan group is enabled to be easily mounted without causing any decrease in the sealing properties, and the sealing is efficiently provided without adversely affecting the motor rotational speed. Thus, labor cost and time are decreased and the quality perception is improved by minimizing the mounting errors which adversely affect sealing, decreasing customer complaints and service failure rates.

The cooking device realized in order to attain the aim of the present invention is illustrated in the attached figures, where:
Figure 1 - is the exploded view of a cooking device.
Figure 2 - is the sideways cross-sectional view of the motor and fan group and the casing.
Figure 3 - is the perspective view of the sealing member.
Figure 4 - is the perspective view of the sealing member.

The elements illustrated in the figures are numbered as follows:
1. Cooking device
2. Casing
3. Motor
4. Fan
5. Shaft
6. Return member
7. Opening
8. Sealing member
9. Cover
10. Skirt
11. Hole
12. Slit

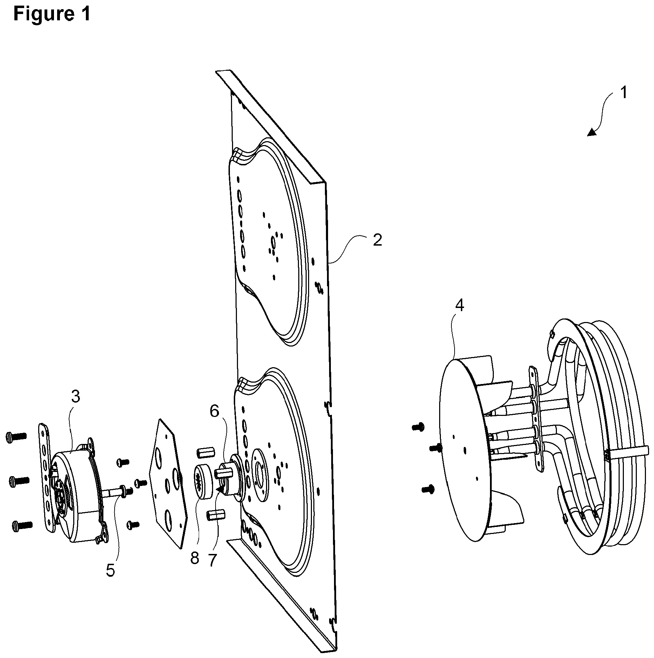

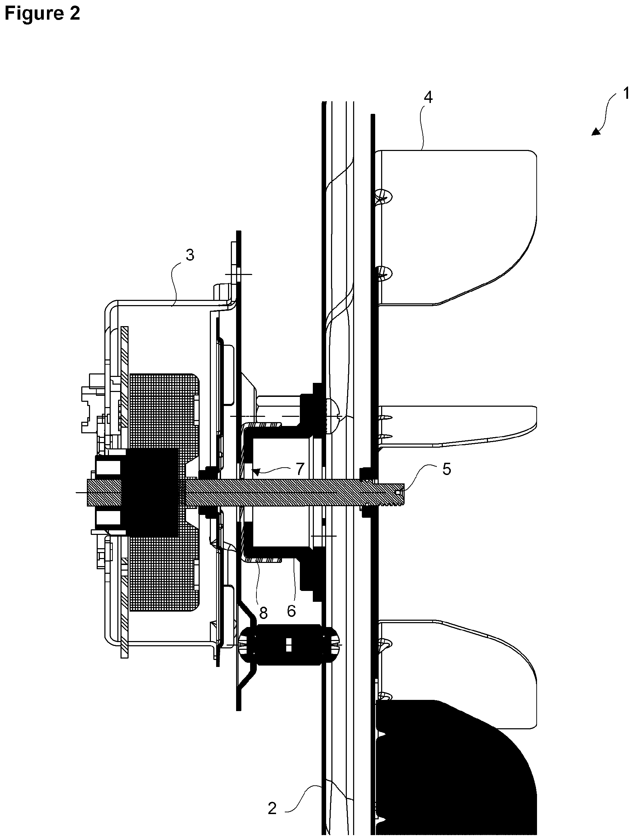

The cooking device (1) comprises a casing (2); a fan (4) which is disposed in front of the casing (2); a motor (3) which is disposed behind the casing (2); a shaft (5) which transfers the movement of the motor (3) to the fan (4) and which is connected to the motor (3) at one end and to the fan (4) at the other end; a return member (6) which is disposed between the casing (2) and the motor (3) onto the shaft (5) so as to be coaxial with the shaft (5) and which has an opening (7) thereon through which the shaft (5) is inserted; and a sealing member (8) which is placed onto the shaft (5) so as to be coaxial with the shaft (5) and which has a cover (9) which covers the opening (7) and a skirt (10) which surrounds the return member (6) when placed onto the return member (6). By attaching the sealing member (8) onto the return member (6), the sealing member (6) is prevented from being displaced during the mounting of the motor (Figure 1 and Figure 2).

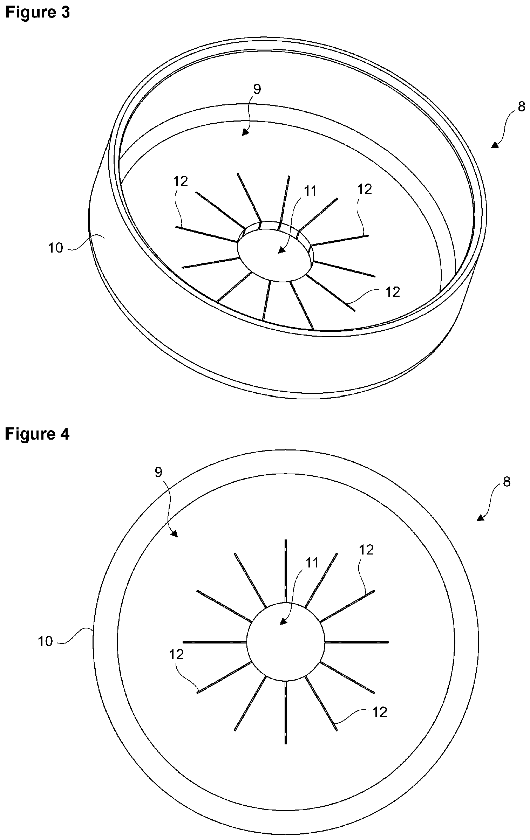

According to the present invention, the sealing member (6) further comprises a hole (11) which is arranged at the center of the cover (9) and through which the shaft (5) passes; at least one slit (12) which is formed on the surface of the cover (9) so as to be outwards from the periphery of the hole (11). According to a preferred embodiment, the skirt (10) extends from the periphery of the cover (9) perpendicularly to the cover (9) and surrounds the cover (9) (Figure 3).

In an embodiment of the present invention, the sealing member (8) comprises a plurality of slits (12) which are equidistantly arranged in the radial direction so as to surround the hole (11) (Figure 4). In this embodiment of the present invention, by means of the slits (12), the cover (9) is rendered flexible and thus, the shaft (5) is enabled to pass through the hole (11) without difficulty and the sealing is prevented from being decreased during said process. The slits (12) act as a curtain such that the sealing member (9) is prevented from adversely affecting the rotational speed of the shaft (5) and slowing the motor (3) down, and water or steam leakage from the cooking chamber into the motor (3) section is avoided. The opening (7) is fully closed by means of the slits (12). Furthermore, by means of the sealing member (8) of the present invention, the mounting and removal processes of the motor (3) are facilitated.

In another embodiment of the present invention, the slits (12) are disposed so as to be symmetrical with respect to the axis which passes through the center of the hole (11).

By means of the present invention, the motor (3) and fan (4) group is enabled to be easily mounted without causing any decrease in the sealing properties, and the sealing is efficiently provided without adversely affecting the motor (3) rotational speed. Thus, manufacturing errors are avoided and customer complaints and service failure rates are decreased, improving the quality perception.

## Claims

1. A cooking device (1) comprising a casing (2); a fan (4) which is disposed in front of the casing (2); a motor (3) which is disposed behind the casing (2); a shaft (5) which transfers the movement of the motor (3) to the fan (4) and which is connected to the motor (3) at one end and to the fan (4) at the other end; and a return member (6) which is disposed between the casing (2) and the motor (3) onto the shaft (5) so as to be coaxial with the shaft (5) and which has an opening (7) thereon through which the shaft (5) is inserted, a sealing member (8) which is placed onto the shaft (5) so as to be coaxial with the shaft (5) and which has a cover (9) which covers the opening (7) and a skirt (10) which surrounds the return member (6) when placed onto the return member (6); wherein the sealing member (8) comprises a hole (11) which is arranged at the center of the cover (9) and through which the shaft (5) passes; **characterized in that**, the sealing member further comprises at least one slit (12) which is formed on the surface of the cover (9) so as to be outwards from the periphery of the hole (11).

2. A cooking device (1) as in Claim 1, **characterized by** a plurality of slits (12) which are equidistantly arranged in the radial direction so as to surround the hole (11).

3. A cooking device (1) as in Claim 2, **characterized by** the slits (12) which are arranged so as to be symmetrical with respect to the axis which passes through the center of the hole (11).

4. A cooking device (1) as in Claim 1, **characterized by** the skirt (10) which extends from the periphery of the cover (9) perpendicularly to the cover (9) and surrounds the cover (9).

## Patentansprüche

1. Ein Kochgerät (1) **umfasst** ein Gehäuse (2); einen Lüfter (4), der vor dem Gehäuse (2) angeordnet ist; einen Motor (3), der hinter dem Gehäuse (2) angeordnet ist; einen Schaft (5), der die Bewegung des Motors (3) auf das Lüfter (4) überträgt und die an einem Ende mit dem Motor (3) und am anderen Ende mit dem Lüfter (4) verbunden ist; und ein Rückführelement (6), das zwischen dem Gehäuse (2) und dem Motor (3) auf der Schaft (5) angeordnet ist, um koaxial mit der Schaft (5) zu sein und das eine Öffnung (7) aufweist, durch die die Schaft (5) eingeführt wird, ein Dichtungselement (8), das auf der Schaft (5) angeordnet ist, um koaxial mit der Schaft (5) zu sein, wobei die eine Abdeckung (9) aufweist, die die Öffnung (7) abdeckt, und eine Schürze (10), die das Rückführelement (6) umgibt, wenn es auf dem Rückführelement (6) platziert ist; wobei das Dichtungselement (8) ein Loch (11) umfasst, das in der Mitte der Abdeckung (9) angeordnet ist und durch das die Schaft (5) verläuft; **gekennzeichnet ist es dadurch,** dass das Dichtungselement ferner mindestens einen Schlitz (12) umfasst, der auf der Oberfläche der Abdeckung (9) so ausgebildet ist, dass er sich außerhalb des Umfangs des Lochs (11) befindet.

2. Ein Kochgerät (1), wie in Anspruch 1 aufgeführt, ist **dadurch gekennzeichnet, dass** eine Vielzahl von Schlitzen (12), die in radialer Richtung äquidistant angeordnet sind, um das Loch (11) zu umgeben.

3. Ein Kochgerät (1), wie in Anspruch 2 aufgeführt, ist **dadurch gekennzeichnet, dass** die Schlitze (12), die symmetrisch zur Achse angeordnet sind, die durch die Mitte des Lochs (11) verläuft.

4. Ein Kochgerät (1), wie in Anspruch 1 aufgeführt, ist **dadurch gekennzeichnet, dass** die Schürze (10), die sich vom Umfang der Abdeckung (9) senkrecht zur Abdeckung (9) erstreckt und die Abdeckung (9) umgibt.

## Revendications

1. Appareil de cuisson (1) comprenant un boîtier (2) ; un ventilateur (4) qui est disposé devant le boîtier (2) ; un moteur (3) qui est disposé derrière le boîtier (2) ; un arbre (5) qui transmet le mouvement du moteur (3) au ventilateur (4) et qui est relié au moteur (3) à une extrémité et au ventilateur (4) à l'autre extrémité ; et un élément de retour (6) qui est disposé entre le carter (2) et le moteur (3) sur l'arbre (5) de manière à être coaxial à l'arbre (5) et qui comporte une ouverture (7) à travers laquelle l'arbre (5) est inséré, un élément d'étanchéité (8) qui est placé sur l'arbre (5) de manière à être coaxial à l'arbre (5) et qui comporte un couvercle (9) qui couvre l'ouverture (7) et une jupe (10) qui entoure l'élément de retour (6) lorsqu'il est placé sur l'élément de retour (6) ; dans lequel l'élément d'étanchéité (8) comprend un trou (11) qui est disposé au centre du couvercle (9) et à travers lequel passe l'arbre (5) ; **caractérisé en ce que** l'élément d'étanchéité comprend en outre au moins une fente (12) qui est formée sur la surface du couvercle (9) de façon à être à l'extérieur de la périphérie du trou (11).

2. Appareil de cuisson (1) selon la déclaration 1, **caractérisé par** une pluralité de fentes (12) qui sont disposées de manière équidistante dans la direction radiale de façon à entourer le trou (11).

3. Appareil de cuisson (1) selon la déclaration 1, **caractérisé par** les fentes (12) qui sont disposées de façon à être symétriques par rapport à l'axe qui passe par le centre du trou (11).

4. Appareil de cuisson (1) selon la déclaration 1, **caractérisé par** la jupe (10) qui s'étend depuis la périphérie du couvercle (9) perpendiculairement au couvercle (9) et entoure le couvercle (9).
